Europäisches Patentamt

European Patent Office

Office européen des brevets

(19)

(11) Numéro de publication: **0 048 203**
**B1**

(12) **FASCICULE DE BREVET EUROPEEN**

(45) Date de publication du fascicule du brevet:
06.03.85

(51) Int. Cl.⁴: **H 02 B 1/04**

(21) Numéro de dépôt: **81401410.6**

(22) Date de dépôt: **11.09.81**

---

(54) **Panneau de fixation pour appareillage.**

---

(30) Priorité: **17.09.80 FR 8019974**

(43) Date de publication de la demande:
**24.03.82 Bulletin 82/12**

(45) Mention de la délivrance du brevet:
**06.03.85 Bulletin 85/10**

(84) Etats contractants désignés:
**AT BE CH DE GB IT LI LU NL SE**

(56) Documents cités:
**DE - A - 2 631 720**
**DE - B - 1 160 917**
**FR - A - 2 358 079**

(73) Titulaire: **MANUFACTURE D'APPAREILLLAGE
ELECTRIQUE DE CAHORS Société Anonyme Française,
B.P. 168, F-46001 Cahors Cedex (FR)**

(72) Inventeur: **Bourrieres, Pierre, 125, rue de la Barre,
F-46000 Cahors (FR)**

(74) Mandataire: **Bouju, André, Cabinet Bouju 38 avenue de la
Grande Armée, F-75017 Paris (FR)**

BUNDESDRUCKEREI BERLIN

EP 0 048 203 B1

## Description

La présente invention concerne un panneau de fixation pour appareillage, notamment électrique.

L'entraxe séparant les trous de fixation des appareils tels que compteurs, disjoncteurs, boîtes à fusibles peut varier d'un modèle à l'autre, et n'est pas connu lors de la fabrication du panneau. D'autre part, la nature et la disposition des appareils est susceptible de changer d'une installation à l'autre.

Le document FR-A-2 358 079 décrit un panneau de fixation pour appareillage réalisé en matière plastique, dont une surface présente un réseau de nervures perpendiculaires entre elles qui définissent des alvéoles de section carrée. Chaque alvéole peut recevoir un vis de fixation dont le filet mord dans la paroi latérale de cette alvéole.

Ce genre de panneau ne donne pas entière satisfaction. Le pas entre deux alvéoles est relativement grand, et si une alvéole ne peut être utilisée, on ne peut pas déplacer le point de fixation de moins d'un pas, que ce soit en hauteur ou en largeur.

Compte-tenu de l'inclinaison des parois des alvéoles, destinée à assurer aux alvéoles leur section progressivement rétrécie, les vis ont tendance à s'engager obliquement, surtout s'il n'a pas été possible de trouver d'alvéole idéalement située pour réaliser la fixation.

Il est également connu d'après le document DE-B-1 160 917 de réaliser un panneau comportant des trous disposés selon trois directions différentes.

Dans une telle structure, il n'est toutefois pas possible de rapprocher les trous sans affaiblir de façon inacceptable la solidité du panneau. Il est donc nécessaire de prévoir des pattes de réglage qui rendent le panneau plus coûteux et compliquent sensiblement la pose des appareillages sur le panneau.

Le but de l'invention est de remédier à ces inconvénients en réalisant un panneau pour appareillage offrant plus de liberté pour ajuster les points de fixation à l'entraxe séparant les trous de fixation des appareils.

Suivant l'invention, le panneau de fixation pour appareillage, présentant sur sa surface un réseau de nervures définissant entre elles des alvéoles destinées à recevoir des vis de fixation, est caractérisé en ce que les nervures sont dirigées selon trois directions différentes et définissent des hexagones ou des triangles.

On établit aninsi trois directions différentes d'alignement répétitif des alvéoles, ce qui augmente les possibilités de décalage à partir d'une alvéole donnée jugée mal disposée pour constituer un point de fixation.

Selon un mode de réalisation avantageux, dans une zone adjacente à l'entrée des alvéoles, les génératrices de la paroi des alvéoles sont sensiblement parallèles entre elles.

Cette zone des alvéoles assure un guidage des vis perpendiculairement au panneau pendant la pose des vis sur le panneau.

D'autres particularités et avantages de l'invention ressortiront encore de la description ci-après.

Aux dessins annexés, donnés à titre d'exemples non limitatifs:

la figure 1 est une vue de dessus du panneau de fixation pour appareillage, la partie gauche de la figure concernant un mode de réalisation du panneau avec des alvéoles hexagonales, et la partie droite de la figure, un autre mode de réalisation du panneau avec des alvéoles triangulaires, certaines seulement de ces alvéoles étant représentées;

la figure 2 est une vue de dessus des alvéoles hexagonales, à échelle agrandie;

la figure 3 est une vue de dessus des alvéoles triangulaires, à échelle agrandie;

la figure 4 est une vue des alvéoles en coupe selon le plan IV-IV de la figure 2;

la figure 5 est une vue des alvéoles en coupe selon le plan V-V de la figure 3;

la figure 6 est une vue en plan d'un autre mode de réalisation du panneau; et

la figure 7 est une vue en plan d'un autre mode de réalisation du panneau.

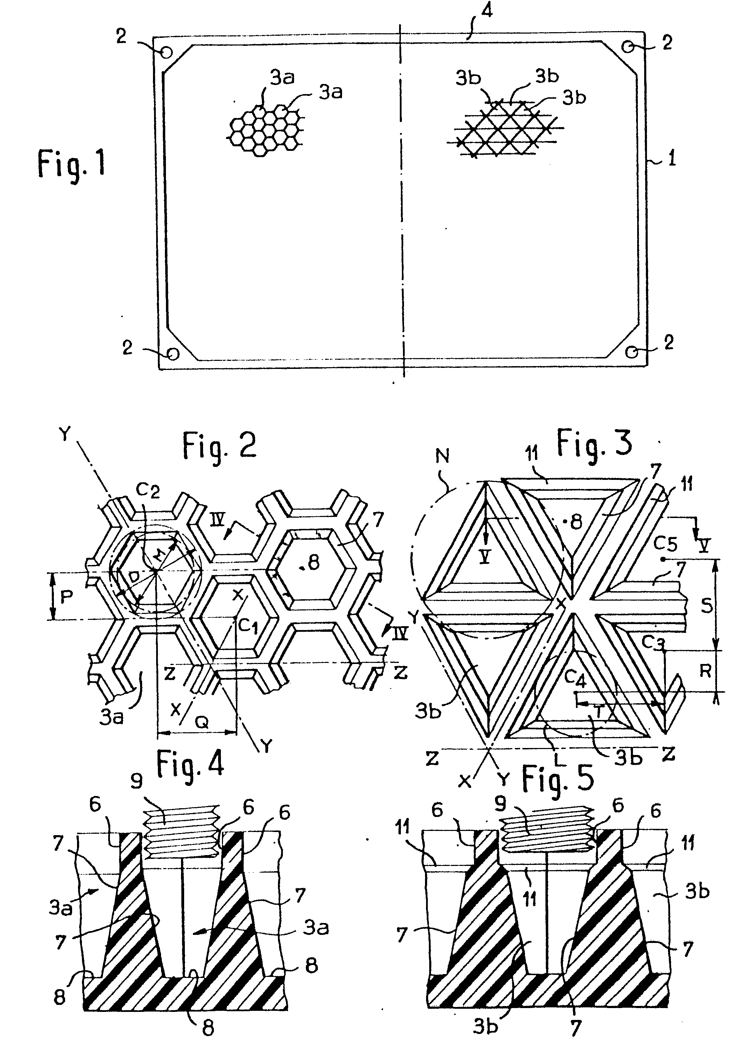

Dans l'exemple de réalisation représenté à la figure 1, le panneau rectangulaire 1, destiné à la fixation d'appareillage électrique tel que compteurs, disjoncteurs ou boîtes à fusibles dans un bâtiment, est réalisé en matière thermoplastique. Chacun des angles du panneau 1 présente un perçage 2 permettant de le fixer à une paroi, par exemple à un mur.

La face du panneau 1 destinée à être visible une fois le panneau fixé, présente un réseau de nervures définissant entre elles des alvéoles 3a, 3b. Le réseau de nervure est entouré par un liseré 4.

Conformément à l'invention, les nervures sont dirigées selon trois directions différentes XX, YY, ZZ (figures 2 et 3), séparées deux à deux par un angle de sensiblement 60°.

Dans l'exemple représenté à la gauche de la figure 1 et à la figure 2, les alvéoles 3a ont une section en hexagone régulier. Selon chacune des directions XX, YY ou ZZ se succèdent alternativement la diagonale d'un hexagone, et une nervure constituant l'un des côtés de deux hexagones adjacents.

Comme le montre la figure 4, dans une zone 6 adjacente à l'ouverture des alvéoles 3a, les génératrices de la paroi des alvéoles 3a sont parallèles entre elles. La zone 6 constitue ainsi un prisme à section hexagonale. La section de la zone 7 adjacente à la zone 6 se rétrécit progressivement depuis la zone 6 jusqu'au fond 8 des alvéoles 3a.

Les alvéoles 3a sont capables de recevoir des vis 9 ayant un diamètre compris entre M et D (figure 2), M étant la longueur d'une médiane de l'ouverture hexagonale des alvéoles, et D la longueur d'une diagonale de cette ouverture. En pratique, pour des alvéoles 3a prévues pour des vis de diamètre moyen égal à 8 mm par exemple, des vis de diamètre compris entre 7 et 9 mm sont admissibles.

Si une alvéole de centre C1 (figure 2) est légèrement trop basse pour assurer la fixation correcte d'un appareil sur le panneau, on a la possibilité de choisir l'alvéole de centre C2, qui correspond à un pas de décalage P du point de fixation, perpendiculairement à la direction ZZ, égal à $\frac{M+e}{2}$, e étant l'épaisseur des nervures séparant les alvéoles 3a.

Si par ailleurs, l'alvéole de centre C1 est trop à droite, l'adoption de l'alvéole de centre C2 correspond à un pas, parallèlement à la direction ZZ, égal à

$$Q = (M+e)\frac{\sqrt{3}}{2}.$$

D'une façon générale, les pas P et Q sont plus petits que dans le cas d'un carré de même médiane où les pas varient de

$$(M+e)\frac{\sqrt{2}}{2} \text{ à } M+e$$

selon l'orientation du réseau.

D'ailleurs, pour une même longueur de médiane, un réseau à alvéoles hexagonales comporte plus d'alvéoles par unité de surface qu'un réseau à alvéoles carrées, et offre donc un meilleur choix de points de fixation.

L'alvéole 3a appropriée étant choisie, on y engage la vis 9 (figure 4). La zone 6 de l'alvéole 3a maintient la vis 9 perpendiculaire au réseau juste avant et pendant le vissage de la vis 9 dans la zone 7 de l'alvéole 3a.

Dans l'exemple représenté à la droite de la figure 1, et aux figures 3 et 5, la section des alvéoles 3b est triangulaire. Ces alvéoles 3b sont définies par trois séries de nervures parallèles entre elles dans chaque série, ces séries étant dirigées selon XX, YY et ZZ respectivement. A chaque point d'intersection passe une nervure de chaque série, ce qui définit un sommet pour six triangles équilatéraux.

Comme le montre la figure 5, les alvéoles 3b présentent comme les alvéoles 3a une zone prismatique 6 adjacente à l'ouverture, et une zone 7 se tétrécissant jusqu'au fond 8 de l'alvéole 3b. Toutefois, les zones 6 et 7 sont séparées par un épaulement 11 rétrécissant la zone 7 par rapport à la zone 6.

Les alvéoles triangulaires 3b sont particulièrement intéressantes car elles permettent d'utiliser des vis 9 dont le diamètre va du simple au double, c'est-à-dire du diamètre du cercle inscrit L au diamètre du cercle exinscrit N.

Par exemple, pour un diamètre moyen de 12 mm, des vis dont le diamètre est compris entre 8 et 16 mm sont admissibles.

Dans l'exemple représenté, le pas de décalage perpendiculairement à la direction ZZ est alternativement égal à

$$R = \frac{H+e}{3} \text{ et à } S = \frac{2}{3}(H+e),$$

H étant la hauteur des triangles et e l'épaisseur des nervures.

Le pas de décalage parallèlement à la direction ZZ est

$$T = \frac{\sqrt{3}}{3}(H+e).$$

Les alvéoles hexagonales 3a ou triangulaires 3b offrent donc toutes deux des possibilités variées pour le choix des points de fixation des appareillages. En outre, la rigidité des réseaux formés de ces alvéoles 3a ou 3b est supérieure à celle des réseaux carrés, ce qui permet de diminuer le poids de matière plastique utilisée.

D'une manière générale, les alvéoles hexagonales qui offrent six faces de prises au filet de la vis, sont préférées quand une bonne résistance à l'arrachage est recherchée. Au contraire, on préfère les alvéoles triangulaires si le diamètre des vis utilisées est très variable.

La fabrication de panneaux alvéolés requiert un moule perfectionné très coûteux. D'autre part, même si les entraxes des appareillages à fixer ne sont pas connus avec précision, il a été trouvé dans le cadre de l'invention, que la pluparat des appareils à fixer avaient leurs points de fixation dans la même zone.

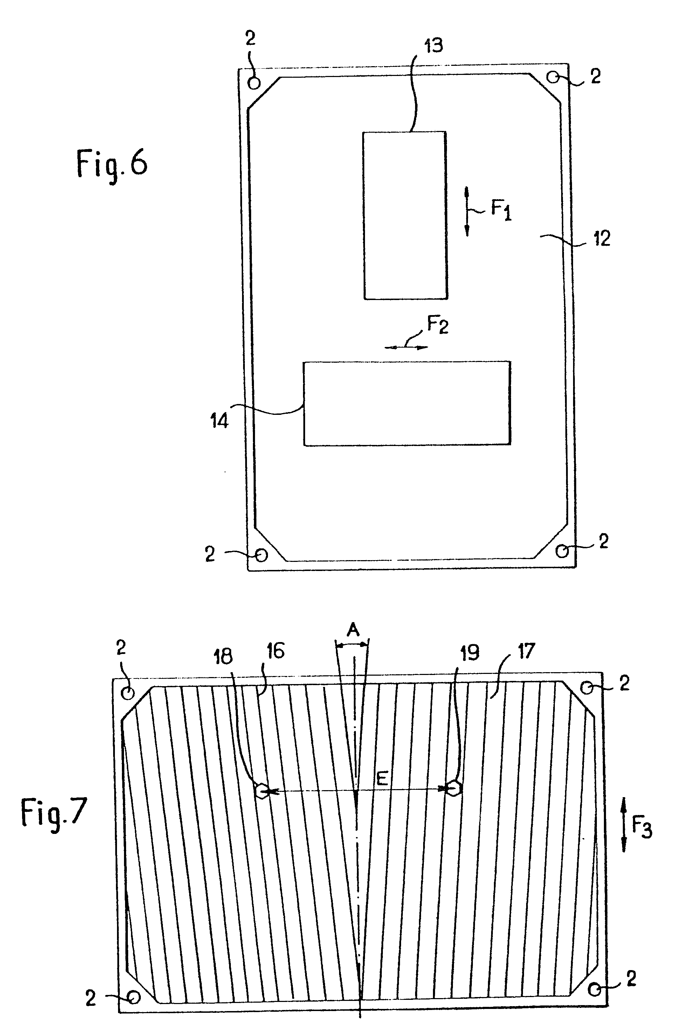

Le panneau représenté à la figure 6 vise à mettre à profit cette constatation pour diminuer le coût de fabrication des panneaux.

Ce panneau comprend un support 12 réalisé en bois, métal, ou matière thermodurcissable, et ayant à chacun de ses coins un trou de fixation 2, par exemple à un mur de bâtiment.

Sur ce panneau sont montées deux plaquettes rectangulaires 13, 14 qui présentent sur leur surface un réseau de nervures définissant des alvéoles 3a ou 3b (non représentées).

La plaquette supérieure 13, qui est disposée dans le sens de la hauteur est destinée à assurer un point de fixation supérieur unique d'un compteur électrique, alors que la plaquette inférieure 14, disposée dans le sens de la largeur, devra assurer deux points de fixation inférieurs du compteur.

De préférence, la plaquette 13 a une certaine liberté de translation selon la direction F1 par rapport au support 12, et la plaquette 14 a une certaine liberté de translation selon la direction F2 perpendiculaire à F1. Ces libertés de translation permettent de trouver plus facilement sur les plaquettes 13, 14, des points de fixation ayant l'entraxe précis défini par l'appareil à fixer.

La variante représentée à la figure 7 répond aussi à ce souci de rechercher l'entraxe optimal pour les points de fixation.

Dans cette variante, le réseau est subdivisé en deux demi-réseaux adjacents 16, 17 symbolisés chacun par une série de lignes parallèles à l'une des trois directions XX, YY, ZZ. Les deux demi-réseaux sont décalés l'un par rapport à l'autre d'un angle A qui est égal à 10° environ dans l'exemple représenté.

Ainsi, on peut ajuster la position de l'appareil à fixer selon la direction F3 parallèle à la ligne de séparation des deux demi-réseaux 16, 17, de manière à trouver des points de fixation 18, 19 séparés par l'entraxe E approprié.

Bien entendu, l'invention n'est pas limitée aux exemples décrits et de nombreux aménagements peuvent être apportés à ces exemples sans sortir du cadre de l'invention.

C'est ainsi que la section des alvéoles peut varier, ainsi que le nombre de directions des nervures, qui peut être supérieur à trois.

Le profil des alvéoles n'est pas limité à ceux des figures 4 et 5. D'ailleurs, le profil de la figure 4 est applicable à des alvéoles de section triangulaire, et inversement, le profil de la figure 5 est applicable à des alvéoles de section hexagonale.

Les valeurs indiquées en ce qui concerne les pas P, Q, R, S, T, sont indicatives puisque des pas différents pourraient être mesurés selon des directions orientées différemment par rapport à l'une quelconque des directions XX, YY ou ZZ.

Dans le panneau de la figure 6, la plaquette 13 peut comporter deux demi-réseaux tels que 16, 17 de la figure 7. En outre, la plaquette 13 et/ou la plaquette 14 peuvent avoir une liberté de mouvement dans toutes les directions par rapport au support 12. Il suffit pour cela qu'elles portent, à l'opposé du réseau, un taquet traversant une ouverture élargie du support, l'extrémité du taquet étant associée à un organe de retenue prenant appui contre le support 12 autour de cette ouverture.

## Revendications

1. Panneau de fixation pour appareillage, présentant sur sa surface un réseau de nervures définissant entre elles des alvéoles (3a, 3b) destinées à recevoir des vis de fixation (9), caractérisé en ce que les nervures sont dirigées selon trois directions différentes (XX, YY, ZZ) et définissent des hexagones ou des triangles.

2. Panneau de fixation selon la revendication 1, caractérisé en ce que les trois directions différentes (XX, YY, ZZ) des nervures sont séparées deux à deux par un angle de sensiblement 60°.

3. Panneau de fixation selon la revendication 2, caractérisé en ce que les alvéoles (3a) ont toutes sensiblement la section d'un hexagone régulier.

4. Panneau de fixation selon la revendication 2, caractérisé en ce que les alvéoles (3b) ont toutes sensiblement la section d'un triangle équilatéral.

5. Panneau de fixation selon l'une des revendications 1 à 4, caractérisé en ce que dans une zone (6) adjacente à l'entrée des alvéoles (3a, 3b), les génératrices de la paroi des alvéoles (3a, 3b) sont sensiblement parallèles entre elles.

6. Panneau de fixation selon la revendication 5, caractérisé en ce que les alvéoles (3a, 3b) sont progressivement rétrécies depuis la zone (6) à génératrices sensiblement parallèles jusqu'à leur fond (8).

7. Panneau de fixation selon la revendication 5, caractérisé en ce que les alvéoles (3b) sont rétrécies vers leur fond par un épaulement (11) adjacent au bord intérieur de la zone à génératrices sensiblement parallèles (6).

8. Panneau de fixation selon l'une des revendications 1 à 7, caractérisé en ce qu'il comprend un support (12) et des plaquettes (13, 14) à réseau de nervures montées sur le support aux emplacements présumés d'implantation des vis de fixation de l'appareillage.

9. Panneau de fixation selon la revendication 8, caractérisé en ce que les plaquettes (13, 14) ont une certaine liberté de déplacement contre le support (12).

10. Panneau de fixation selon l'une des revendications 1 à 9, caractérisé en ce que le panneau présente deux demi-réseaux (16, 17) légèrement décalés angulairement l'un par rapport à l'autre.

## Patentansprüche

1. Befestigungsplatte für Geräte, die auf ihrer Oberfläche ein Raster aus Rippen aufweist, die zwischen sich Zellen (3a, 3b) zur Aufnahme von Befestigungsschrauben (9) bilden, dadurch gekennzeichnet, daß die Rippen längs wenigstens drei verschiedenen Richtungen (XX, YY, ZZ) gerichtet sind und Sechsecke oder Dreiecke begrenzen.

2. Befestigungsplatte nach Anspruch 1, dadurch gekennzeichnet, daß die drei verschiedenen Richtungen (XX, YY, ZZ) der Rippen jeweils paarweise gegeneinander um einen Winkel von etwa 60° verdreht sind.

3. Befestigungsplatte nach Anspruch 2, dadurch gekennzeichnet, daß die Zellen (3a) alle im wesentlichen den Schnitt eines regelmäßigen Sechsecks aufweisen.

4. Befestigungsplatte nach Anspruch 2, dadurch gekennzeichnet, daß die Zellen (3b) alle im wesentlichen den Schnitt eines gleichseitigen Dreiecks aufweisen.

5. Befestigungsplatte nach einem der Ansprüche 1 bis 4, dadurch gekennzeichnet, daß in einer an den Eingang zu den Zellen (3a, 3b) angrenzenden Zone (6) die Erzeugenden der Wandung der Zellen (3a, 3b) im wesentlichen zueinander parallel sind.

6. Befestigungsplatte nach Anspruch 5, dadurch gekennzeichnet, daß die Zellen (3a, 3b) von der Zone (6) mit im wesentlichen parallelen Erzeugenden ausgehend bis zu ihrem Grund (8) zunehmend verjüngt sind.

7. Befestigungsplatte nach Anspruch 5, dadurch gekennzeichnet, daß die Zellen (3b) zu ihrem Grund hin durch eine Schulter (11) verjüngt sind, die an den Innenrand der Zone (6) mit im wesentlichen parallelen Erzeugenden angrenzt.

8. Befestigungsplatte nach einem der Ansprüche 1 bis 7, dadurch gekennzeichnet, daß sie einen Träger (12) und Plättchen (13, 14) mit einem Rippenraster umfaßt, die auf dem Träger an den voraussichtlichen Einbaustellen der Befestigungsschrauben der Geräte befestigt sind.

9. Befestigungsplatte nach Anspruch 8, dadurch gekennzeichnet, daß die Plättchen (13, 14) eine gewisse Verschiebungsfreiheit in bezug auf den Träger (12) aufweisen.

10. Befestigungsplatte nach einem der Ansprüche 1 bis 9, dadurch gekennzeichnet, daß die Platte zwei Halbraster (16, 17) aufweist, die gegeneinander leicht verdreht sind.

**Claims**

1. Mounting panel for equipment, provided on its surface with a network of ribs defining between them recesses (3a, 3b) which are intended to receive fixing screws (9), characterized in that the ribs extend in three different directions (XX, YY, ZZ) and define hexagons or triangles.

2. Mounting panel in accordance with claim 1, characterized in that the three different directions (XX, YY, ZZ) of the ribs are separated in pairs by an angle of substantially 60°.

3. Mounting panel in accordance with claim 2, characterized in that the recesses (3a) all have substantially the cross-section of a regular hexagon.

4. Mounting panel in accordance with claim 2, characterized in that the recesses (3b) all have substantially the cross-section of an equilateral triangle.

5. Mounting panel in accordance with any one of claims 1 to 4, characterized in that, in a zone (6) adjacent to the inlets of the recesses (3a, 3b), the generator-lines of the walls of the recesses (3a, 3b) are substantially parallel to each other.

6. Mounting panel in accordance with claim 5, characterized in that the recesses (3a, 3b) progressively decrease in size from the zone (6) having substantially parallel generator-lines to their bottom portion (8).

7. Mounting panel in accordance with claim 5, characterized in that the recesses (3b) are reduced in size near their bottom portion by a shouldered portion (11) which is adjacent to the inner edge of the zone having substantially parallel generator-lines (6).

8. Mounting panel in accordance with any one of claims 1 to 7, characterized in that it comprises a support (12) and small plates (13, 14) having a network of ribs and mounted on the support at the presumed locations of the screws for fixing the equipment.

9. Mounting panel in accordance with claim 8, characterized in that the small plates (13, 14) have a certain freedom of displacement against the support (12).

10. Mounting panel in accordance with any one of claims 1 to 9, characterized in that the panel has two half-networks (16, 17) which are angularly displaced to a slight extent with respect to each other.

Fig. 1

Fig. 2

Fig. 3

Fig. 4

Fig. 5

Fig.6

Fig.7